# FASCICULE DE BREVET EUROPEEN

(11) **EP 2 036 148 B1**
(45) Date de publication et mention de la délivrance du brevet: **13.02.2013**
(21) Numéro de dépôt: 07734963.7
(22) Date de dépôt: 28.06.2007
(51) Int. Cl.: H01M 4/54, H01M 4/34, H01M 4/62, H01M 10/34, H01M 10/32

(54) **NOUVELLE ÉLECTRODE POSITIVE D'ARGENT POUR ACCUMULATEURS ALCALINS**
NEUARTIGE SILBER-POSITIV ELEKTRODE FÜR ALKALISPEICHERBATTERIEN
NOVEL SILVER POSITIVE ELECTRODE FOR ALKALINE STORAGE BATTERIES

(30) Priorité: 05.07.2006 FR 0606094
(43) Date de publication de la demande: 18.03.2009
(73) Titulaire: S.C.P.S. Société de Conseil et de Prospective Scientifique S.A., 93115 Rosny-Sous-Bois (FR)
(72) Inventeur: BUGNET, Bernard, F-94420 Le Plessis-Trévise (FR); DONIAT, Denis, F-75116 Paris (FR); FOURGEOT, Fabrice, F-94120 Fontenay-sous-Bois (FR); ROUGET, Robert, F-75016 Paris (FR)
(74) Mandataire: Stona, Daniel
(86) Numéro de dépôt international: PCT/IB2007/001901
(87) Numéro de publication internationale: WO 2008/004105

(56) Documents cités:
- FR-A1- 2 537 784
- FR-A1- 2 858 464
- JP-A- 55 133 765
- US-A- 3 223 555
- US-A- 3 282 732
- US-A- 4 835 077
- US-A- 5 981 105

## Description

La présente invention concerne le domaine des accumulateurs alcalins à électrode positive d'argent.

Elle est plus particulièrement relative à une technologie nouvelle d'électrode positive d'argent, à son application aux accumulateurs alcalins, notamment en association avec une électrode négative de zinc, aux séparateurs et à l'électrolyte mis en oeuvre, et au fonctionnement de l'accumulateur argent-zinc (AgZn) ainsi constitué, tant en mode ouvert qu'en mode étanche.

Les couples électrochimiques mettant en oeuvre une électrode d'argent (argent-zinc, argent-cadmium, ...) sont connus depuis le 19ème siècle.

L'utilisation effective de systèmes secondaires alcalins à électrode positive d'argent ne s'est réellement développée qu'à partir de 1940, après la mise au point par Henri Georges ANDRÉ d'un accumulateur argent-zinc utilisant des séparateurs de cellophane fonctionnant comme des membranes semi-perméables, et des électrodes de zinc dont on s'efforçait de développer la porosité.

Malgré ce progrès et les développements ultérieurs qui en résultèrent, la durée de vie des accumulateurs AgZn est restée très limitée, de l'ordre de quelques dizaines de cycles seulement, pour n'atteindre que difficilement la centaine de cycles. Leur fonctionnement "commercial" n'a de surcroît pu être obtenu qu'en configurations ouvertes. Cette situation a conduit à voir leur application limitée à quelques usages militaires, pour lesquels sont surtout recherchés les hauts niveaux de puissance spécifique du système.

La faible aptitude au cyclage de l'accumulateur AgZn est attribuée pour l'essentiel au comportement de l'électrode de zinc en milieu alcalin. Celui de l'électrode d'argent en est également responsable.

Les réactions qui interviennent au niveau de l'anode sont les suivantes en accumulateur alcalin :

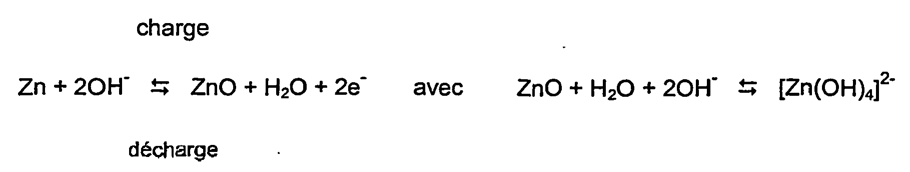

C'est en fait d'une manière générale à la formation de dépôts de structure modifiée par rapport à leur forme d'origine, et souvent qualifiés de dendritiques, spongieux ou pulvérulents, que conduit la recharge de l'électrode de zinc à partir de ses oxydes et hydroxydes et des zincates. Ce phénomène intervient de surcroît dans un très large domaine de densités de courant

Les recharges successives conduisent ainsi rapidement à des croissances ou poussées anarchiques de zinc à travers les séparateurs et à la mise en court-circuit avec les électrodes de polarité opposée.

Quant aux dépôts de type pulvérulent ou spongieux, ils ne permettent pas la reconstitution d'électrodes aptes à un fonctionnement satisfaisant et durable, puisque l'adhérence de la matière active est insuffisante.

Plus encore, la réduction des oxydes, hydroxydes et zincates en zinc métallique au niveau de l'anode, lors des phases de recharges, se caractérise également par des changements de morphologie de l'électrode elle-même. On observe, selon les modes de fonctionnement des accumulateurs, différents types de modifications de forme de l'anode, de par un phénomène de redistribution non uniforme du zinc au cours de sa formation. Cela peut notamment se traduire localement par une densification nuisible de la masse active anodique en surface de l'électrode, le plus souvent au niveau de sa zone centrale. Dans le même temps, on assiste en général à une diminution de la porosité de électrode, ce qui contribue à accélérer la formation préférentielle du zinc à sa surface.

Ces handicaps importants, réduisant le nombre de cycles réalisables à quelques dizaines seulement - niveau insuffisant pour conférer un intérêt économique réel à un système secondaire - ont conduit à la réalisation de très nombreux travaux ayant pour objectif d'améliorer les caractéristiques de dépôt du zinc en recharge, en vue d'accroître le nombre de cycles de charges - décharges que pourrait accepter le générateur.

Une innovation essentielle a été apportée et décrite par l'exposé d'invention du brevet français n° 99 00859 (numéro de publication 2.788.887), complété par celui de la demande de brevet français n° FR 2 828 335, la technologie d'anode de zinc élaborée pouvant autoriser la réalisation de plusieurs centaines de cycles dans une large gamme de régimes de fonctionnement et jusqu'à des profondeurs de décharge très élevées, grâce à la mise en oeuvre de moyens destinés à accroître le rendement d'utilisation de la matière active, par amélioration de la percolation des charges en son sein.

Cette invention repose à son origine sur l'observation qu'un drainage insuffisant des charges au sein de la matière active conduit à favoriser la formation du dépôt de zinc, lors des recharges, en des sites ne représentant qu'un pourcentage limité de l'ensemble de la masse active. C'est donc alors à partir de sites d'une surface totale limitée par rapport à la surface développée globale de la matière anodique, que s'effectue cette croissance du zinc, phénomène se traduisant le plus souvent par un caractère anarchique du dépôt pouvant conduire à des poussées à travers les séparateurs, ou par la densification du dépôt.

La technologie décrite dans le document sus-mentionné montre que ce mécanisme peut être fortement réduit lorsque l'on parvient à réaliser le dépôt de la même quantité totale de zinc sur une surface beaucoup plus importante, en multipliant dans des proportions importantes les sites de formation du dépôt, dans tout le volume de l'électrode.

Cette technologie, selon une mise en oeuvre préférentielle, se traduit par l'utilisation, au sein de l'anode de zinc, d'un double ou triple niveau de collecte électrique :
- un réseau collecteur principal : un support-collecteur d'électrode de type "mousse métallique" (structure alvéolaire réticulée),
- un réseau conducteur secondaire : une dispersion de particules céramiques conductrices chimiquement inertes dans l'accumulateur,
- un possible réseau conducteur tertiaire complémentaire : une dispersion de bismuth dans la masse active anodique.

Une "masse antipolaire" peut également être introduite dans l'anode de zinc et contribuer de manière significative au niveau de performances obtenu.

Contrairement à l'art antérieur dans ce domaine, cette nouvelle électrode peut fonctionner sans inconvénient en milieu alcalin concentré, sans utilisation de multiples couches de séparateurs destinées à retarder d'une part la diffusion des zincates et d'autre part la croissance des dendrites.

Dans ces conditions de mise en oeuvre, des accumulateurs nickel-zinc qui intègrent cette nouvelle technologie d'anode, présentent une résistance interne réduite et peuvent répondre à de forts appels de puissance sans qu'apparaissent des phénomènes de passivation de l'électrode de zinc.

Dans le cas des accumulateurs argent-zinc correspondant à l'état de l'art traditionnel, les séparateurs jouent un double rôle :
- éviter la migration des ions zincates et retarder la croissance dendritique du zinc lors des charges,
- arrêter la migration des ions solubles d'argent (Ag⁺ et Ag²⁺) et des particules d'argent métallique se formant lors de cycles successifs.

La cellophane est le matériau traditionnellement préféré pour les séparateurs d'accumulateurs AgZn, car il offre, pour un système à faible capacité de cyclage, le meilleur compromis entre coût et performances. Son utilisation requiert cependant l'emploi d'un électrolyte alcalin fortement concentré, habituellement constitué de potasse 10 à 12 N, pour limiter l'hydrolyse de la cellulose.

Pour atteindre les durées de fonctionnement de plusieurs dizaines de cycles, au moins quatre couches de membrane cellophane sont nécessaires, ainsi que des couches de séparateur fibreux, celui-ci devant favoriser la rétention d'électrolyte entre les électrodes (rôle de réservoir d'électrolyte).

Des substituts de la cellophane ont été proposés : cellophane traitée à l'argent, séparateur microporeux de polypropylène incorporant de l'acétate de cellulose, de l'alcool polyvinylique, etc., sans pour autant que puisse être réduit le nombre de couches de séparateur nécessaires à un fonctionnement acceptable de l'accumulateur AgZn.

Du fait d'une faible durée de vie du système AgZn, à laquelle il ne semblait pas possible d'échapper en raison de la rapide dégradation bien connue de l'anode de zinc, relativement peu de travaux ont été consacrés aux cathodes d'argent utilisées dans cet accumulateur, pour en améliorer le fonctionnement.

Ces cathodes sont habituellement fabriquées par frittage de poudre d'argent métallique ou de monoxyde d'argent (Ag₂O), ce dernier étant réduit en argent métallique lors de la phase de frittage. Le collecteur utilisé est constitué d'une toile, ou d'une feuille perforée ou déployée, en argent pur.

De telles électrodes offrent des capacités spécifiques élevées (jusqu'à 300 Ah/kg et 1500 Ah/dm³), mais pour obtenir quelques dizaines de cycles de fonctionnement de l'accumulateur AgZn, ces positives doivent être associées à des anodes de zinc fortement surcapacitives, afin d'éviter d'imposer à celles-ci d'importantes profondeurs de décharge. De plus, le système est réalisé avec des couches multiples de séparateur. Ces deux contraintes pénalisent les énergies spécifiques de l'accumulateur ainsi constitué.

La demande de brevet français n° FR 2 537 784 a trait à une électrode pour générateur électrochimique comportant une matière active à base de poudre d'oxyde d'argent et un conducteur électronique sous forme de pellicules d'un corps choisi parmi l'argent, le graphite, le nickel et le cobalt, lesdites pellicules étant en mélange intime avec ladite poudre, l'ensemble étant plastifié à l'aide d'un liant

Le brevet américain n° US 3 282 732 concerne un procédé de préparation d'une électrode d'oxyde d'argent divalent pour une batterie, comprenant le traitement d'une grille d'argent avec une solution aqueuse de carboxy-méthyl-cellulose, puis l'application immédiate d'oxyde d'argent divalent sur la grille, le mise à niveau mécanique de la grille traitée et l'application d'une pression d'au moins 1000 livres par pouce carré (psi, soit 69 bars) sur la grille traitée.

Le brevet américain n° US 3 223 555 se rapporte à une batterie étanche à assemblage d'empilement d'électrodes.

Le brevet américain n° US 4 835 077 est relative à un matériau de cathode contenant de l'oxyde d'argent comprenant de l'AgO, de l'Ag₅Pb₂O₆, de l'Ag₂PbO₂ et au moins 5%, en poids du matériau de la cathode, d'Ag₂O.

Le brevet américain n° US 5 981 105 traite d'une électrode destinée à une utilisation dans une cellule électrochimique à électrolyte minéral alcalin, constituée essentiellement d'un matériau actif, d'un dépolarisant fait d'un oxyde métallique monovalent, d'un collecteur de courant et d'un liant, cette électrode étant dépourvue d'additifs conducteurs ou semiconducteurs électroniques.

La demande de brevet japonais n° JP 55 133765 propose une électrode positive moulée obtenue par moulage sous pression d'un mélange positif et addition de poudre d'oxyde de zinc en une quantité allant de 0,49 à 9,1 % en poids.

Les auteurs de la présente demande de brevet ont logiquement cherché à faire bénéficier le système AgZn du progrès considérable réalisé en matière d'anode de zinc, avec la technologie décrite par le brevet 99 00859 sus-mentionné.

Une telle électrode négative de zinc apporte en effet des réponses essentielles aux problèmes et contraintes de l'accumulateur AgZn, du fait de son importante durée de vie en cyclage, sans modification morphologique,
- y compris à de hauts régimes de charge et décharge,
- jusqu'à des profondeurs de décharge très élevées (permettant d'éviter les fortes surcapacités anodiques),
- en électrolytes concentrés (indispensables pour l'usage de la cellophane),
- et sans devoir faire appel à de multiples couches de séparateurs.

Les auteurs de la présente invention ont cependant mis en évidence que la seule association d'une électrode d'argent conventionnelle, telle que décrite ci-dessus, et d'une électrode de zinc réalisée selon les demandes de brevets français FR 2788887 et FR 2828335 ne permettait pas d'aboutir à un nombre de cycles satisfaisant, du fait de la faible durée de vie propre d'une telle cathode d'argent : dégradation progressive rapide en cyclage, avec migration importante des espèces solubles imprégnant l'électrode opposée et les séparateurs, jusqu'à mise en court-circuit.

Les auteurs ont ainsi réalisé des accumulateurs en plaçant une électrode d'argent de conception conventionnelle dont le collecteur était une feuille perforée d'argent, de capacité nominale 0,75 Ah, entre deux électrodes de zinc de technologie décrite dans les documents FR 2788887 et FR 2828 335 précités. Les anodes présentaient dans ces montages une surcapacité de 30% par rapport à la cathode, afin de mesurer l'aptitude de l'électrode d'argent au cyclage de longue durée, celle de l'anode de zinc étant connue.

L'électrolyte était de la potasse 10 N, saturée en oxyde de zinc, et contenant 10 g/litre de lithine (LIOH).

Les accumulateurs ont été cyclés au régime de 0,2 C₅ A, avec une profondeur de décharge de 70% calculée sur la capacité nominale de la cathode d'argent, Le cyclage a été arrêté lorsque la capacité franchit le seuil des 50% de la capacité nominale initiale. Cette valeur est atteinte après environ 90 à 100 cycles selon les montages.

L'objet de la présente Invention est de définir une technologie nouvelle de réalisation pour l'éloctrode positive d'argent, qui permette pour la première fois d'accroître fortement l'aptitude au cyclage de celle-ci et par suite d'augmenter la durée de vie en cyclage de l'accumulateur AgZn lui-même.

Selon la présente invention, il est proposé de réaliser une électrode d'argent qui soit de type plastifié, et utilisant un collecteur tridimensionnel, la masse active pouvant avantageusement indure un agent porophore et de mouillage de l'électrode.

A travers les travaux de définition d'une nouvelle technologie d'électrode d'argent, on a en particulier cherché à concevoir une cathode qui puisse fonctionner dans de bonnes conditions d'homogénéité de champ électrique et de diffusion ionique en son sein, de manière à optimiser les conditions de la réduction électrochimique des espèces oxydées d'argent, en recharge, pour conduire à l'obtention d'un dépôt d'argent métallique le plus complet et le plus homogène possible au sein de l'électrode.

C'est pour l'obtention de telles conditions de fonctionnement qu'il a été fait appel, d'une part à un collecteur tridimensionnel à haute porosité et grande surface développée, et d'autre part à des additifs cathodiques constitués d'oxydes métalliques, faisant office d'agent porophore et de mouillage de l'électrode, et pouvant également présenter une capacité de fixation des ions solubles Ag⁺ et Ag²⁺.

Les auteurs ont notamment constaté que certains oxydes métalliques utilisés conduisaient à une modification majeure du mécanisme de charge et de décharge de l'électrode d'argent, conjointement à une augmentation importante de la durée de cyclage de l'accumulateur.

Le collecteur tridimensionnel mis en oeuvre est préférentiellement du type mousse métallique alvéolaire réticulée; l'additif cathodique est préférentiellement constitué d'oxyde de zinc, d'oxyde de calcium et/ou de dioxyde de titane.

On comprendra mieux la portée de l'invention à travers les exemples de réalisation qui suivent, où sont décrits les modes de mise en oeuvre de l'électrode d'argent selon l'invention, ainsi que celle d'accumulateurs argent-zinc incorporant des anodes de zinc réalisées selon les descriptions des demandes de FR 2788887 et FR 2828 335.

### Exemple 1 (comparatif)

Pour la réalisation du collecteur cathodique tridimensionnel, on recouvre avantageusement une mousse de nickel de grade 90 PPI, d'une densité surfacique de 500 g/m² et d'épaisseur ramenée par compactage ou laminage de 1,6 mm à 1,0 mm, par dépôt - notamment électrolytique - d'une fine couche d'argent, dont l'épaisseur est au moins de l'ordre du micron.

Pour tester dans une première étape l'apport exclusif d'un tel collecteur au comportement de la cathode, on réalise la suite des opérations de fabrication selon le mode traditionnel de préparation des électrodes frittées d'argent : on forme une pâte en mélangeant de la poudre de monoxyde d'argent (Ag₂O), dont les particules ont un diamètre inférieur ou égal à 40 microns, avec de l'eau et de la carboxy-méthylcellulose, et on en remplit la porosité de la mousse.

Après séchage, l'électrode est traitée thermiquement sous atmosphère réductrice à environ 700°C, pour réduire l'oxyde et fritter la poudre d'argent ainsi obtenue et le collecteur. L'électrode est ensuite pressée sous 2000 kPa pour ramener son épaisseur à 0,5 mm.

L'électrode ainsi obtenue est placée entre deux électrodes de zinc réalisées selon la description des demandes de brevet FR 2788 887 et FR 2828 335, les anodes étant surcapacitives par rapport à la cathode d'argent.

Les séparateurs sont constitués d'une couche de membrane microporeuse en polyéthylène (Celgard 3401) placée sur les électrodes de zinc, d'un séparateur fibreux en polyamide (Viledon) servant de réservoir d'électrolyte, et d'une couche de séparateur en polyéthylène greffé (Shanghai Shilong Hi-Tech Co), placée au contact de électrode d'argent. Il n'est pas fait usage de membrane de cellophane, pour éviter que l'hydrolyse progressive de celle-ci ne perturbe l'observation des performances propres de l'électrode d'argent.

L'électrolyte est une potasse 10 N saturée en oxyde de zinc et contenant 10 gl/itre de lithine et 0,5 g/litre d'aluminium.

L'électrode d'argent, présente une capacité nominale de 0,76 Ah, correspondant à un rendement par rapport à la capacité théorique qui n'excède pas 50%

Elle est cyclée en accumulateur ouvert au régime de 0,2 C₅ A, avec une profondeur de décharge de 70 % calculée sur la capacité nominale de la cathode d'argent.

On constate que cette électrode frittée sur support mousse métallique conserve une bonne stabilité de sa capacité durant près de 100 cycles, à environ 80% de sa capacité initiale. Mais la capacité chute alors rapidement Le cyclage est arrêté lorsque la capacité n'est plus que de 50 % de la capacité nominale initiale, seuil qui est atteint après environ 200 cycles.

L'intérêt d'un collecteur tridimensionnel à haute porosité et à grande surface développée, en particulier dans cet exemple de type mousse réticulée métallique, apparaît clairement à travers un doublement de la durée de vie mesurée pour un arrêt du cyclage à 50% de la capacité nominale initiale.

Le grade de la mousse, et donc la dimension de ses pores, peuvent être choisis dans une large gamme, et préférentiellement des grades 45 à 100 indus, le choix pouvant évoluer en fonction notamment de l'épaisseur définie pour la cathode et des densités de puissance que l'on entend obtenir du système.

Le dépôt d'argent effectué sur une mousse de nickel permet, dans tous les modes d'utilisation testés, d'obtenir une amélioration notable des rendements de la cathode, ce revêtement d'argent accroissant la surtention d'oxygène au niveau de l'électrode.

Des variantes de réalisation ont montré que l'on peut également utiliser efficacement comme support d'étectrode d'autres types de collecteurs à structures tridimensionnelles à haute porosité, tels que des tissés métalliques tridimensionnels (en particulier du type de ceux dont la structure peut être produite sur métiers à tisser Raschel) ou des feutres métalliques.

On notera également qu'un tel collecteur tridimensionnel peut être réalisé selon l'Invention en tout métal compatible avec les potentiels d'utilisation de la cathode, éventuellement revêtu d'une couche d'argent Il est notamment possible de réaliser un tel collecteur en argent.

### Exemple 2 (comparatif)

On réalise une électrode d'argent de type plastifié en remplissant une mousse de nickel de 90 PPI recouverte d'argent par dépôt électrolytique selon description de l'exemple 1, avec une pâte constituée de poudre de monoxyde d'argent (Ag₂O), dont les particules ont un diamètre inférieur à 40 microns, d'un liant hydrophobe, par exemple constitué de PTFE ajouté à raison de 3 % en poids par rapport à la matière active, et d'eau à titre de solvant

Après séchage, l'électrode est comprimée à 2000 kPa. La cathode obtenue est utilisée comme électrode positive dans une cellule AgZn, identique à celle décrite dans l'exemple 1. L'électrolyte est également identique.

La capacité nominale est de 0,8 Ah, soit 98 % de la capacité théorique. L'électrode est cyclée au régime de 0,2 C₅ A, avec une profondeur de décharge de 70%.

Le cyclage est arrêté après 120 cycles, lorsque l'électrode atteint 50 % de sa capacité initiale nominale, après être passée par 80 % à 45 cycles, et 62 % à 100 cycles.

Le liant organique utilisé pour la mise en oeuvre de la pâte cathodique peut avantageusement, - outre le PTFE -, être du PVDF, un copolymère styrène - butadiène (SBR), un copolymère acrylonitrile - butadiène (NBR), ou leurs mélanges.

Le liant peut être avantageusement ajouté à raison d'environ 1 à 10 % en poids par rapport à la matière active, et préférentiellement à raison de 2 à 6 %.

### Exemple 3 (Comparatif)

On réalise une électrode d'argent de type plastifiée dont la matière active est introduite sous forme de monoxyde d'argent (Ag₂O), selon exemple 2, mais en ajoutant à la pâte de la poudre d'oxyde de zinc (ZnO) à raison de 3 % en poids par rapport à la matière active.

Après séchage, l'électrode est comprimée à 2000 kPa. La cathode obtenue est utilisée comme électrode positive dans une cellule AgZn identique à celle décrite dans les exemples 1 et 2. L'électrolyte est également identique.

La capacité nominale est de 0,8 Ah, soit 98 % de la capacité théorique. L'électrode est cyclée au régime de 0,2 C₅ A, avec une profondeur de décharge de 70%.

Le cyclage est arrêté après 140 cycles, lorsque l'électrode atteint 50 % de sa capacité initiale nominale, après être passée par 80 % à 48 cycles, et 73 % à 100 cycles. Après 100 cycles, la perte progressive de capacité s'accélère.

### Exemple 4 (Comparatif)

On réalise une électrode d'argent de type plastifié dont la matière active est introduite sous forme de monoxyde d'argent (Ag₂O), selon exemple 3, mais où la quantité d'oxyde de zinc en poudre passe de 3 à 30 % en poids par rapport à la matière active.

Après séchage, l'électrode est comprimée à 2000 kPa. La cathode obtenue est utilisée comme électrode positive dans une cellule AgZn identique à celle décrite dans les exemples précédents. L'électrolyte est également identique.

La capacité nominale est de 0,78 Ah, soit 96 % de la capacité théorique. L'électrode est cyclée au régime de 0,2 C₅ A, avec une profondeur de décharge de 70%.

Le cyclage est arrêté après 135 cycles, lorsque l'électrode atteint 50 % de sa capacité initiale nominale, après être passée par 80 % à 95 cycles, et 76 % à 100 cycles. Après 100 cycles, la perte progressive de capacité s'accélère.

L'intérêt de la présence d'oxyde de zinc se mesure au vu des résultats comparés des exemples 2 à 4, à travers un accroissement de la stabilité du niveau de capacité (de 10 à 15 % supérieur après 100 cycles), ces capacités améliorées se traduisant par un gain en durée de vie pour un arrêt du cyclage à 50% de la capacité nominale Initiale.

Il est apparu à l'analyse des résultats de variantes de réalisations, qu'il est avantageux d'utiliser des quantités d'oxyde de zinc comprises entre 1,5 et 50 % en poids par rapport à la matière active, et préférentiellement comprises entre 5 et 35 %, pour un effet significatif sans détérioration excessive des capacités spécifiques.

### Exemple 5 (Comparatif)

On réalise une électrode d'argent de type plastifiée en remplissant une mousse de nickel de 90 PPI recouverte d'argent par dépôt électrolytique selon description de l'exemple 1, avec une pâte constituée, pour la matière, active, de poudre d'argent métallique de granulométrie avantageusement comprise entre 0,2 et 40 microns, le diamètre moyen des particules étant préférentiellement d'environ 2 microns, d'un liant hydrophobe constitué de PTFE ajouté à raison de 3 % en poids par rapport à la masse d'argent, et d'eau à titre de solvant.

Après séchage, l'électrode est comprimée à 2000 kPa. La cathode obtenue est utilisée comme électrode positive dans une cellule AgZn identique à celle décrite dans les exemples précédents. L'électrolyte est également identique.

La capacité nominale est de 0,7 Ah, soit 65 % de la capacité théorique. L'électrode est cyclée au régime de 0,2 C₅ A, avec une profondeur de décharge de 70 %. Le cyclage est arrêté après 250 cycles, lorsque l'électrode atteint 50 % de sa capacité Initiale nominale, après être passée par 80% à 175 cycles.

Des mises en oeuvre variées ont permis de mettre en évidence que les poudres d'argent les plus fines permettaient d'obtenir les meilleurs rendements, alors que des poudres plus grosses favorisent les plus forts appels de puissance. Le choix préférentiel des auteurs se porte sur des poudres de granulométrie essentiellement situées d'environ 0,8 à 5 microns.

### Exemple 6 (Comparatif)

On réalise une électrode d'argent de type plastifié selon le mode opératoire décrit dans l'exemple 5, en ajoutant toutefois à la masse active de l'oxyde de zinc à raison de 30 % en poids par rapport à la masse d'argent.

Après séchage, l'électrode est comprimée à 2000 kPa. La cathode obtenue est utilisée comme électrode positive dans une cellule AgZn identique à celle décrite dans les exemples précédents. L'électrotyte est également identique.

La capacité nominale est de 0,6 Ah, soit 72 % de la capacité théorique. l'électrode est cyclée au régime de 0,2 C₅ A avec une profondeur de décharge de 70%.

Plus de 500 cycles sont obtenus, la capacité restituée après ces 500 cycles étant encore de 60% de la capacité nominale, après être passée par 80 % à 215 cycles.

### Exemple 7 (invention)

On réalise une électrode d'argent de type plastifié selon le mode opératoire décrit dans l'exemple 5, en ajoutant toutefois à la masse active du dioxyde de titane à raison de 30 % en poids par rapport à la masse d'argent.

Après séchage, l'électrode est comprimée à 2000 KPa. La cathode obtenue comme électrode positive dans une cellule AgZn identique à celle décrite dans les exemples précédents. L'électrolyte est également identique.

La capacité nominale est de 0.8 Ah, soit 85 % de la capacité théorique. L'électrode est cyclée au régime de 0,2 C₅ A avec une profondeur de décharge de 90%.

Plus de 350 cydes sont obtenus, la capacité restituée après ces 350 cycles étant encore de 80 % de la capacité nominale.

### Exemple 8 (invention)

On réalise une électrode d'argent de type plastifié selon le mode opératoire décrit dans l'exemple 5, en ajoutant toutefois à la masse active de l'oxyde de zinc et du dioxyde de titane respectivement à raison de 18 % et de 12 % en poids par rapport à la masse d'argent.

Après séchage, l'électrode est comprimée à 2000 KPa. La cathode obtenue est utilisée comme électrode positive dans une cellule AgZn identique à celle décrite dans les exemples précédents. L'électrolyte est également identique.

La capacité nominale est de 0,9 Ah, soit 90 % de la capacité théorique. L'électrode est cyclée au régime de 0,2 C₅ A, avec une profondeur de décharge de 90%.

Plus de 500 cycles sont obtenus, la capacité restituée après ces 500 cycles étant encore de 80 % de la capacité nominale.

Les exemples 5 à 8 montrent que l'utilisation de poudre d'argent comme matière active apporte un gain important en terme de stabilité de la capacité en cyclage, conduisant à un fort allongement de la durée de vie de la cathode d'argent et de l'accumulateur AgZn.

Ces caractéristiques sont renforcées par la présence d'oxydes métalliques agissant à titre de porophore. Ces additifs, constitués entre autres d'oxyde de zinc ou de dioxyde de titane, peuvent être efficacement ajoutés dans des gammes de quantités semblables à celles décrites à travers les exemples 3, 4 et 6 à 8, soit avantageusement entre 1,5 et 50 % en poids par rapport à la matière active, et préférentiellement entre 5 et 35 %. Les additifs porophores cités en exemple peuvent être également mélangés dans des proportions variables, la somme des deux additifs représentant avantageusement 1,5 à 50 % en poids de la matière active, et préférentiellement 5 à 35 %.

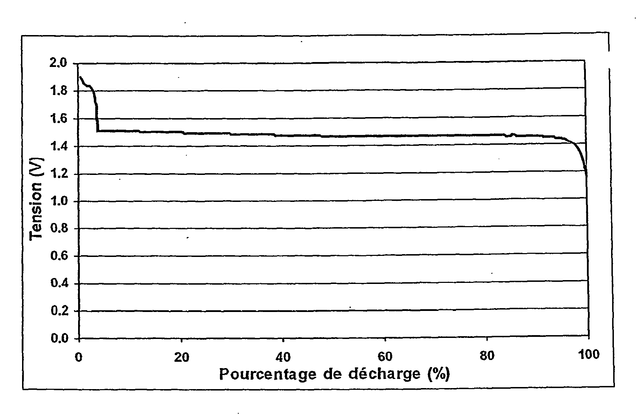

Le dioxyde de titane, outre une amélioration significative de la cyclabilité de l'électrode d'argent, modifie l'allure des courbes de décharge de l'accumulateur AgZn comme le montre la figure unique.

On observe une disparition presque complète du premier palier de décharge au profit d'un second palier.

Sans que les auteurs de la présente invention puissent en l'état avancer une théorie expliquant la phénomène, il apparaît que la disparition de ce premier palier n'affecte pas le rendement de l'électrode d'argent. On observe en effet qu'en présence de dioxyde de titane, la capacité restituée de l'électrode est égale ou supérieure à 90 % de la capacité théorique.

Tout se passe comme si les réactions successives de réduction de l'oxyde d'argent s'effectuaient en une seule étape selon la réaction :

AgO + H₂O + 2e⁻ → Ag + 2OH⁻

### Exemple 9 (Comparatif)

On réalise une électrode d'argent selon l'exemple 6. On réalise une électrode de zinc selon un mode opératoire décrit dans la demande de brevet français FR 2828335. Les électrodes sont découpées aux dimensions appropriées pour être, après spiralage, placées dans un godet d'accumulateur de format R6 (ou AA). Le rapport choisi des capacités des électrodes positive et négative est de 1. Les séparateurs utilisés sont identiques à ceux décrits dans les exemples précédents.

L'accumulateur est rempli d'un électrolyte constitué de potasse 10 N, saturée avec de l'oxyde de zinc, et contenant 20 g/litre de lithine et 0,5 g/litre d'aluminium.

On fixe sur la face intérieure du couvercle un catalyseur de recombinaison des gaz hydrogène et oxygène réalisé selon un mode opératoire décrit dans la demande de brevet français FR 2858464. L'ensemble est ensuite fermé, et l'accumulateur ainsi obtenu est soumis, après formation, à un cyclage au régime de 0,25 C (C/4) en charge et 0,5 C (C/2) en décharge. L'accumulateur fonctionne en mode étanche.

La capadté nominale initiale des éléments ainsi réalisés, dont l'optimisation n'a pas été recherchée ici, qui est de 1,10 à 1,15 Ah selon les accumulateurs, est conservée.à 100 % à 180 cycles, et demeure à 90 % après 250 cycles et 79 % après 390 cycles. Le cyclage se poursuit

Des cyclages d'éléments R6, en mode étanche, effectués au régime de C/4 en charge et en décharge, à température ambiante, la charge étant effectuée à courant constant sans limitation de tension, avec surcharge de 10 %, montrent qu'avec le dispositif de recombinaison des gaz mentionné ci-dessus, la pression interne reste limitée à un maximum de 600 kPa, parfaitement compatible avec le montage en godets cylindriques.

Pour la capacité de 1,10 Ah non optimisée mentionnée ci-dessus, mesurée en format R6, et en prenant en compte la tension moyenne de décharge de 1,60 Volt, et la masse correspondante de 22,2 g, les énergies nominales massique et volumique s'établissent à 74 Wh/kg et 198 Wh/litre.

Divers essais de fonctionnement et stockage à températures éloignées de l'ambiante ont montré l'excellent comportement d'accumulateurs argent-zinc selon l'invention.

On mentionnera les quelques résultats suivants, obtenus en accumulateurs étanches de type R6, à titre d'illustration du niveau de performances atteint par la mise en oeuvre de la présente invention :
- Pour une charge et une décharge effectuées toutes deux au régime de C/5 et à 55°C, la capacité restituée est de 88 % de la capacité nominale, pour une tension d'arrêt de 1,0 Volt.
- Après une charge en C/5 à température ambiante, un stockage de 72 heures à 55°C, la décharge en C/5 à température ambiante restitue 84 % de la capacité nominale, pour une tension d'arrêt de 1,0 Volt.
- Après une charge en C/5 à température ambiante, un stockage de 72 heures à -20°C, la décharge en C/4 à température ambiante restitue 96 % de la capacité nominale, pour une tension d'arrêt de 1,0 Volt.

A l'aide de ces exemples, on montre qu'une électrode d'argent de type plastifié réalisée par remplissage d'une mousse métallique à l'aide d'une pâte contenant au titre de la matière active des particules d'argent métallique, et une poudre de dioxyde de titane et éventuellement d'oxyde de zinc d'oxyde de calcium faisant office d'agent porophore et d'agent de fixation des ions solubles Ag⁺ et Ag²⁺, présente une aptitude au cyclage et un rendement très supérieurs à ceux des électrodes de type fritté, et également améliorées par rapport à ceux d'électrodes plastifiées dont la matière active est introduite sous forme d'oxyde d'argent.

Dans des conditions comparables, et sans sortir du cadre de la présente invention, il est possible d'associer une ou plusieurs cathodes d'argent selon l'invention à une ou plusieurs anodes de cadmium, en particulier de type plastifié à collecteur mousse métallique, pour réaliser des accumulateurs alcalins argent-cadmium (AgCd), capables de fonctionner de manière performante en modes ouvert et étanche, et de constituer en particulier d'excellents systèmes de puissance.

L'utilisation de dioxyde de titane seul ou mélangé à l'oxyde de zinc, améliore également le rendement de l'électrode d'argent et accroît fortement son aptitude au cyclage.

Le dioxyde de titane modifie également le processus de réduction électrochimique de l'électrode d'argent, en réduisant, voir en supprimant, le premier plateau de décharge correspondant à la réduction de l'oxyde d'argent en monoxyde d'argent.

Les auteurs ont mis en évidence que l'utilisation à titre de matière active cathodique, dans des électrodes plastifiées à support tridimensionnel selon l'invention, de poudre de monoxyde d'argent permettait généralement d'obtenir des capacités nominales initiales supérieures à celles obtenues en utilisant de la poudre d'argent métallique. Mais ils ont par ailleurs mis en évidence, comme cela ressort d'ailleurs largement de l'étude comparée des résultats fournis en exemples, que l'utilisation de poudre d'argent métallique permettait d'obtenir une plus grande stabilité de la capacité en cyclage et une plus longue durée de vie.

Ils ont alors réalisé des cathodes selon l'invention, en associant dans des proportions variées argent métallique et monoxyde d'argent, et ont pu montrer que des telles associations permettent d'obtenir des électrodes performantes à la fois en termes de capacités spécifiques et de durées de vie.

Des associations Ag - Ag₂O, diverses en proportions, peuvent être retenues, en fonction notamment des applications visées et du type de caractéristique prioritairement recherché dans le cadre de chacune.

L'association de cathodes d'argent selon l'invention, et d'anodes de zinc réalisées selon la technologie décrite dans les brevet demandes de français FR 2788857 et FR 2 828 335, permet de réaliser des accumulateurs alcalins argent-zinc en configurations ouvertes et étanches, en formats prismatiques et cylindriques, qui présentent une excellente aptitude au cyclage, et utilisent des électrolytes à base de potasse de concentrations initiales supérieures ou égales à 7 N. Cette aptitude au cyclage prolongé est confirmée avec des rapports de capacités entre électrodes négative et positive variant avantageusement selon les montages réalisés de l'unité à environ 1,50 en liaison notamment avec des définitions d'épaisseurs et de capacités surfaciques variées des électrodes.

## Revendications

1. Électrode d'argent pour générateurs électrochimiques secondaires alcalines où la masse active est préparée sous forme d'une pâte plastifiée dans laquelle la matière active est incorporée sous forme de particules d'argent métallique et/ou de monoxyde d'argent, la pâte comportant également un agent liant organique et un solvant et la masse active comprenant un additif porophore, introduit sous forme d'oxydes métalliques, cette électrode d'argent étant **caractérisée en ce que** l'additif porophore est constitué de dioxyde de titane, éventuellement avec de l'oxyde de zinc ou de l'oxyde de calcium.

2. Électrode d'argent pour générateurs électrochimiques secondaires alcalins selon la revendication 1, **caractérisée en ce que** l'additif porophore en outre de l'oxyde de zinc.

3. Électrode d'argent pour générateurs électrochimiques secondaires alcalins selon la revendication 1 2, **caractérisée en ce que** l'additif porophore est constitué de dioxyde de titane et d'oxyde de calcium.

4. Électrode d'argent pour générateurs électrochimiques secondaires alcalins selon l'une des revendications 1 à 3, **caractérisée en ce qu'**elle est réalisée par empâtage d'un collecteur tridimensionnel à haute porosité avec la pâte plastifiée de masse active, l'ensemble étant ensuite séché et compacté.

5. Électrode d'argent pour générateurs électrochimiques secondaires alcalins selon l'une des revendications 1 à 4, **caractérisée en ce que** la poudre d'argent a une granulométrie comprise entre 0.1 et 40 microns.

6. Électrode d'argent pour générateurs électrochimiques secondaires alcalins selon l'une des revendications 1 à 5, **caractérisée en ce que** la poudre de monoxyde d'argent a une granulométrie inférieure ou égale à 40 microns.

7. Électrode d'argent pour générateurs électrochimiques secondaires alcalins selon l'une des revendications 1 à 6, **caractérisée en ce que** l'additif porophore constitué d'oxydes métalliques représente 1,5 à 50 % en poids de la matière active.

8. Électrode d'argent pour générateurs électrochimiques secondaires alcalins selon l'une des revendications 1 à 7, **caractérisée en ce que** le collecteur tridimensionnel à haute porosité est une mousse métallique alvéolaire réticulée.

9. Électrode d'argent pour générateurs électrochimiques secondaires alcalins selon la revendication 4 **caractérisée en ce que** le collecteur tridimensionnel à haute porosité est un tissé métallique ou un feutre métallique.

10. Électrode d'argent pour générateurs électrochimiques secondaires alcalins selon la revendication 9, **caractérisée en ce que** le collecteur tridimensionnel à haute porosité est réalisé en tout métal compatible avec les potentiels d'utilisation de la cathode.

11. Électrode d'argent pour générateurs électrochimiques secondaires alcalins selon la revendication 10. **caractérisée en ce que** le collecteur tridimensionnel à haute porosité est réalisé en argent, ou en nickel éventuellement revêtu d'une couche d'argent.

12. Électrode d'argent pour générateurs électrochimiques secondaires alcalins selon l'une des revendications 1 à 11, **caractérisée en ce que** le liant organique est du PTFE, du PVDF, un copolymère styrène - butadène (SBR), un copolymère acrylonitrile - butadiène (NBR), ou leurs mélanges.

13. Électrode d'argent pour générateurs électrochimiques secondaires alcalins selon les revendications 1 et 12, **caractérisée en ce que** le liant représente de 1 à 10 % en poids de la matière active.

14. Générateur électrochimique secondaire comprenant une ou plusieurs électrodes positives d'argent réalisées selon l'une quelconque des revendications 1 à 13, **caractérisé en ce que** l'électrolyte alcalin est réalisé à partir de potasse de concentration initiale supérieure ou égale à 7 N.

15. Générateur électrochimique secondaire alcalin selon la revendication 14, **caractérisé en ce que** la ou les électrodes négatives sont des anodes de zinc.

16. Générateur électrochimique secondaire alcalin selon la revendication 14, **caractérisée en ce que** la ou les électrodes négatives sont des anodes de cadmium.

17. Générateur électrochimique secondaire alcalin selon la revendication 15, **caractérisé en ce que** la ou les électrodes négatives sont des anodes de zinc réalisées selon la technologie décrite dans la demande de brevet français n° 99 00859 publiée sous le numéro FR 2 788 887.

18. Générateur électrochimique secondaire alcalin selon l'une des revendications 14 à 17, **caractérisé en ce qu'**il fonctionne en mode étanche, un catalyseur placé à l'intérieur du boîtier permettant la recombinaison catatylique de l'oxygène et de l'hydrogène formés lors du cyclage dudit générateur.

## Claims

1. Silver electrode for alkaline secondary electrochemical generators where the active mass is prepared in the form of a plasticised paste in which the active matter is incorporated in the form of metallic silver particles and/or silver monoxide particles, the paste also comprising an organic binder and a solvent, and the active mass comprising a porophore additive introduced in the form of metal oxides, said silver electrode being **characterized in that** the porophore additive is formed of titanium dioxide optionally with zinc oxide or calcium oxide.

2. Silver electrode for alkaline secondary electrochemical generators according to claim 1, **characterized in that** the porophore additive further comprises zinc oxide.

3. Silver electrode for alkaline secondary electrochemical generators according to claim 1, **characterized in that** the porophore additive is formed of titanium dioxide and calcium oxide.

4. Silver electrode for alkaline secondary electrochemical generators according to any one of claims 1 to 3, **characterized in that** is produced by impregnating a highly porous three-dimensional collector with the plasticized paste of active mass, these then being dried and compacted.

5. Silver electrode for alkaline secondary electrochemical generators according to any one of claims 1 to 4, **characterized in that** the silver powder has a particle size distribution between 0.1 and 40 microns.

6. Silver electrode for alkaline secondary electrochemical generators according to any one of claims 1 to 5, **characterized in that** the silver monoxide powder has a particle size distribution lower than or equal to 40 microns.

7. Silver electrode for alkaline secondary electrochemical generators according to any one of claims 1 to 6, **characterized in that** the porophore additive formed of metal oxides represents 1.5 to 50% by weight of the active matter.

8. Silver electrode for alkaline secondary electrochemical generators according to any one of claims 1 to 7, **characterized in that** the highly porous three-dimensional collector is a cross-linked cellular metal foam.

9. Silver electrode for alkaline secondary electrochemical generators according to claim 4, **characterized in that** the highly porous three-dimensional collector is a metal fabric or a metal felt

10. Silver electrode for alkaline secondary electrochemical generators according to claim 9, **characterized in that** the highly porous three-dimensional collector is made of any metal compatible with the usage potentials of the cathode.

11. Silver electrode for alkaline secondary electrochemical generators according to claim 10, wherein the highly porous three-dimensional collector is made of silver or nickel optionally coated with a silver layer.

12. Silver electrode for alkaline secondary electrochemical generators according to any one of claims 1 to 11, **characterized in that** the organic binder is PTFE, PVDF, a styrene-butadiene copolymer (SBR), an actylonitrile-butadiene copolymer (NBR) or a mixture thereof.

13. Silver electrode for alkaline secondary electrochemical generators according to any one of claims 1 and 12, **characterized in that** the binder represents from 1 to 10% by weight of the active matter.

14. Secondary electrochemical generator comprising one or more silver positive electrodes according to any one of claims 1 to 13, **characterized in that** the alkaline electrolyte is made from potassium hydroxide having an initial concentration greater than or equal to 7 N.

15. Secondary electrochemical generator according to claim 14, **characterized in that** the negative electrode(s) is/are (a) zinc anode(s).

16. Secondary electrochemical generator according to claim 14, **characterized in that** the negative electrode(s) is/are (a) cadmium anode(s).

17. Secondary electrochemical generator according to claim 15, **characterized in that** the negative electrode(s) is/are (a) zinc anode(s) produced according to the technology described in French patent application no. 99 00859 published under no. FR 2 788 887.

18. Secondary electrochemical generator according to any one of claims 14 to 17, **characterized in that** it functions in a tight manner, a catalyst arranged inside the housing enabling the oxygen and hydrogen formed during the cycle of said generator to be recombined in a catalytic manner.

## Patentansprüche

1. Silberelektrode für elektrochemische alkalische Sekundärgeneratoren, bei der die aktive Masse in Gestalt einer plastifizierten Paste aufbereitet ist, bei der das aktive Material in Gestalt von metallischen Silberpartikeln und/oder von Silbermonoxid eingelagert ist, wobei die Paste weiterhin ein organisches Bindemittelagens sowie ein Lösungsmittel aufweist und wobei die aktive Masse über einen Treibmittelzusatz verfügt, der in Gestalt von Metalloxiden zugesetzt ist, wobei die Silberelektrode **dadurch gekennzeichnet ist, dass** der Treibmittelzusatz durch Titandioxid, gegebenenfalls mit Zinkoxid oder Kalziumoxid, gebildet ist.

2. Silberelektrode für elektrochemische alkalische Sekundärgeneratoren nach Anspruch 1, **dadurch gekennzeichnet, dass** der Treibmittelzusatz weiterhin Zinkoxid aufweist.

3. Silberelektrode für elektrochemische alkalische Sekundärgeneratoren nach Anspruch 1, **dadurch gekennzeichnet, dass** der Treibmittelzusatz durch Titandioxid und Kalziumoxid gebildet ist.

4. Silberelektrode für elektrochemische alkalische Sekundärgeneratoren nach einem der Ansprüche 1 bis 3, **dadurch gekennzeichnet, dass** sie durch Auftragen eines dreidimensionalen Kollektors mit hoher Porosität mit der plastifizierten Paste der aktiven Masse ausgeführt ist, wobei die Gesamtheit anschließend getrocknet und verdichtet ist.

5. Silberelektroden für elektrochemische alkalische Sekundärgeneratoren nach einem der Ansprüche 1 bis 4, **dadurch gekennzeichnet, dass** das Silberpulver eine Körnigkeit zwischen 0,1 und 40 Mikrometer aufweist.

6. Silberelektrode für elektrochemische alkalische Sekundärgeneratoren nach einem der Ansprüche 1 bis 5, **dadurch gekennzeichnet, dass** das Silbermonoxidpulver eine Körnigkeit von weniger oder gleich 40 Mikrometer aufweist.

7. Silberelektrode für elektrochemische alkalische Sekundärgeneratoren nach einem der Ansprüche 1 bis 6, **dadurch gekennzeichnet, dass** der Treibmittelzusatz durch Metalloxide mit einem Anteil von 1,5 bis 50 Gewichtsprozent der aktiven Masse gebildet ist.

8. Silberelektrode für elektrochemische alkalische Sekundärgeneratoren nach einem der Ansprüche 1 bis 7, **dadurch gekennzeichnet, dass** der dreidimensionale Kollektor mit hoher Porosität ein metallischer zellenartiger vernetzter Schaum ist.

9. Silberelektrode für elektrochemische alkalische Sekundärgeneratoren nach Anspruch 4, **dadurch gekennzeichnet, dass** der dreidimensionale Kollektor mit hoher Porosität ein metallisches Gewebe oder ein metallischer Filz ist.

10. Silberelektrode für elektrochemische alkalische Sekundärgeneratoren nach Anspruch 9, **dadurch gekennzeichnet, dass** der dreidimensionale Kollektor mit hoher Porosität insgesamt aus einem Metall hergestellt ist, das mit dem Betriebspotenzial der Kathode kompatibel ist.

11. Silberelektrode für elektrochemische alkalische Sekundärgeneratoren nach Anspruch 10, **dadurch gekennzeichnet, dass** der dreidimensionale Kollektor mit hoher Porosität aus Silber oder aus Nickel, gegebenenfalls mit einer Silberschicht bedeckt, ausgeführt ist.

12. Silberelektrode für elektrochemische alkalische Sekundärgeneratoren nach einem der Ansprüche 1 bis 11, **dadurch gekennzeichnet, dass** das organische Bindemittel PTFE, PVDF, ein Styrol-Butadien-Copolymer (SBR), ein Acrylnitril-Butadien-Copolymer (NBR) oder Mischungen daraus ist.

13. Silberelektrode für elektrochemische alkalische Sekundärgeneratoren nach den Ansprüchen 1 und 12, **dadurch gekennzeichnet, dass** das Bindemittel einen Anteil von 1 bis 10 Gewichtsprozent der aktiven Masse bildet.

14. Elektrochemischer Sekundärgenerator mit einer oder mehreren positiven Silberelektroden, die gemäß einem der Ansprüche 1 bis 13 ausgeführt sind, **dadurch gekennzeichnet, dass** das alkalische Elektrolyt auf der Grundlage von Kalziumcarbonat mit einer anfänglichen Konzentration von mehr als oder gleich 7 N gebildet ist.

15. Elektrochemischer alkalischer Sekundärgenerator nach Anspruch 14, **dadurch gekennzeichnet, dass** die oder jede negative Elektrode eine Zinkanode ist.

16. Elektrochemischer alkalischer Sekundärgenerator nach Anspruch 14, **dadurch gekennzeichnet, dass** die oder jede negative Elektrode eine Kadmiumanode ist.

17. Elektrochemischer alkalischer Sekundärgenerator nach Anspruch 15, **dadurch gekennzeichnet, dass** die oder jede negative Elektrode eine Zinkanode ist, die gemäß der unter der Nummer FR 2 788 887 veröffentlichten französischen Patentanmeldung Nr. 99 00859 beschriebenen Technologie ausgeführt ist.

18. Elektrochemischer alkalischer Sekundärgenerator nach einem der Ansprüche 14 bis 17, **dadurch gekennzeichnet, dass** er in einem abgekapselten Modus arbeitet, wobei im Inneren des Gehäuses ein Katalysator vorhanden ist, der die katalytische Rekombination des während des zyklischen Betriebs des Generators erzeugten Sauerstoffs und Wasserstoffs gestattet.
